(19) Europäisches Patentamt
European Patent Office
Office européen des brevets

(11) Veröffentlichungsnummer: **0 004 884**
**B1**

(12) **EUROPÄISCHE PATENTSCHRIFT**

(45) Veröffentlichungstag der Patentschrift: **03.03.82**

(51) Int. Cl.³: **C 08 F 14/06, C 08 F 2/24**

(21) Anmeldenummer: **79100938.4**

(22) Anmeldetag: **29.03.79**

# (54) Verfahren zur Polymerisation von Vinylchlorid.

(30) Priorität: **19.04.78 DE 2817050**

(43) Veröffentlichungstag der Anmeldung:
**31.10.79 Patentblatt 79/22**

(45) Bekanntmachung des Hinweises auf die Patenterteilung:
**03.03.82 Patentblatt 82/9**

(84) Benannte Vertragsstaaten:
**BE DE FR GB IT NL**

(56) Entgegenhaltungen:
**keine**
**DE - A - 1 050 062**
**DE - A - 1 795 046**
**DE - A - 2 125 586**

(73) Patentinhaber: **BASF Aktiengesellschaft**
**Carl-Bosch-Strasse 38**
**D-6700 Ludwigshafen (DE)**

(72) Erfinder: **Ahrens, Wilhelm, Dr.**
**Gaertnerweg 12**
**D-6140 Bensheim 1 (DE)**

EP 0 004 884 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Verfahren zur Polymerisation von Vinylchlorid

Die Erfindung betrifft ein Verfahren zur Polymerisation von Vinylchlorid (VC) nach dem Emulsions-, Suspensions- bzw. Mikrosuspensionsverfahren, bei dem die Bildung von Wandbelägen im Polymerisationsreaktor weitestgehend verhindert wird.

Bei der Emulsions-, Suspensions- und Mikrosuspensionspolymerisation von Vinylchlorid und den damit copolymerisierbaren Monomeren bilden sich and den Wänden der Polymerisationsreaktoren Wandbeläge aus Homo- oder Copolymerisaten des Vinylchlorids, welche den Wärmedurchgang erschweren. Außerdem können losgelöste Anteile dieser Wandbeläge mit dem hergestellten Produkt aus dem Reaktionsgefäß ausgetragen werden und das Polymerisat verunreinigen.

Es ist deshalb erforderlich, derartige Wandbeläge von Zeit zu Zeit aus dem Reaktionsgefäß zu entfernen bzw. nach vollendeter Polymerisation und vor erneuter Verwendung des Reaktors diesen innen zu reinigen. Dies läßt sich meist nur durch eine aufwendige Druckwasserwäsche der Wände des Reaktors erreichen.

Es sind daher schon verschiedentlich Vorschläge gemacht worden, durch Zusätze geeigneter Stoffe während der Polymerisation des Vinylchlorids die Bildung von Wandbelägen zu verhindern. So ist es beispielsweise aus der DE—OS 23 13 277 bekannt, die Polymerisation des Vinylchlorids unter Verwendung bestimmter Diacylperoxide und/oder Dialkylperoxidicarbonate in Gegenwart von Wurster'schen Salzen in einem bestimmten pH-Bereich durchzuführen. Weitere Vorschläge finden sich in der DE—OS 23 57 867, in der DE—OS 22 63 181 sowie in den DE—OS 25 18 814 und 25 18 260. Die Polymerisation von Vinylchlorid in Gegenwart bestimmter Farbstoffe, wie es beispielsweise in der DE—OS 20 44 295 beschrieben ist, bringt zwar eine Verminderung der Wandbelagsbildung, jedoch geht diese einher mit einer Verfärbung der Polymerisate, die in manchen Fällen unerwünscht sein wird.

Ferner ist es aus den deutschen Patentanmeldungen P 26 34 784 und P 27 34 881 bekannt, die Polymerisation von Vinylchlorid in Gegenwart von Polymerverbindungen durchzuführen, die Phosphonsäuregruppen in der Seitenkette enthalten bzw. niedermolekulare, Phosphonsäuregruppen enthaltende. Verbindungen, als Wandbelagverhinderer zu verwenden.

Es sind auch eine Reihe von Verfahren zur Herstellung von VC-Polymerisaten bekannt, bei denen bestimmte organische Komplexbildner vom Typ der Aminopolycarbonsäuren bzw. der Polyaminopolycarbonsäuren zur Anwendung gelangen. So ist z.B. in der DE—AS 21 25 586 ein Verfahren zur Herstellung von VC-Polymerisaten beschrieben, wobei in Gegenwart von organischen Komplexbildnern in Mengen von 1 bis 20 ppm, bezogen auf das zu polymerisierende Monomere, polymerisiert wird. Diese Komplexbildner oder deren Salze bewirken in dem genannten Mengenbereich eine Erniedrigung der Viskosität der aus den VC-Polymerisaten zubereiteten Plastisole.

Ebenfalls für die Herstellung von für Plastisole geeignetem PVC ist die Verwendung von Aminopolycarbonsäuren (Nitrilotriessigsäure) und den Polyaminopolycarbonsäuren (Ethylendiamintetraessigsäure) und deren Salzen oder alternativ von Zuckern, wie Rohr- oder Fruchtzucker oder Mannose sowie Glycerin, Glykosen etc. in der US—PS 3 179 646 beschrieben. Durch Zugabe der vorstehend genannten Verbindungen läßt sich nach den Angaben in der zitierten PS bei Abwesenheit von üblichen Dispergierhilfsstoffen, wie Methylcellulose (vgl. Beispiel 11) ein Plastisol der gewünschten Korngröße herstellen, das keine in Wasser lösliche Verunreinigungen mehr aufweist.

In der DE—OS 17 95 046, die auf die Anmelderin der vorstehend zitierten US—PS zurückgeht, ist es beschrieben, während der Polymerisation von Vinylchlorid zur Verhinderung der Ansammlung von Polymerisat an den Reaktorwänden eine wäßrige Lösung von Alkali- und/oder Erdalkalisalzen von Aminopolycarbonsäuren oder Polyaminopolycarbonsäuren zu verwenden. Es wird in der zitierten DT—OS auf Seite 6, letzter Absatz und Seite 7, erster Absatz, ausgeführt, daß die Verwendung von Ethylendiamin-N,N'-tetraessigsäure unter den von der Anmelderin beschriebenen Versuchsbedingungen einen übermäßig starken Wandelbelag ergab.

Aus der US—PS 3 125 557 schließlich ist es bekannt, bei der Polymerisation von Vinylchlorid Aminopolyessigsäure oder deren Verbindungen in Mengen von 0,005 bis 300 ppm zu verwenden, um die Farbe bzw. die Farbstabilität des Polymerisats zu verbessern.

Nach der in der zitierten DE—OS 17 95 046 beschriebenen negativen Resultaten bezüglich der Wandbelagsverhinderung von Ethylendiamintetraessigsäure war es nicht zu erwarten gewesen, daß die Anwendung der Verbindungen von Aminomono- oder Polycarbonsäuren oder von Polyaminopolycarbonsäuren bzw. deren Gemische in wäßriger Lösung bei einem pH-Wert von 5 oder unterhalb von 5 generell für alle bekannten Polymerisationtechniken des Vinylchlorids (Emulsions-Suspensions-Mikrosuspensions-Verfahren) zu einem Ergebnis in Bezug auf die Wandbelagsverhinderung führen würde, insbesondere wenn man berücksichtigt, daß aus den anderen bekannten Patentschriften, z.B. US—PS 3 125 557, lediglich Beispiele enthalten sind, bei denen die Salze der Komplexbildner in Mengen bis zu höchstens 200 ppm, bezogen auf das Monomere, zur Anwendung gelangen, oder, wie im Beispiel der US—PS 3 179 646 ausgeführt, das Mikrosuspensionsverfahren zur Herstellung von PVC in Abwesenheit von üblichen Dispergierhilfsmitteln, wie Methylcellulose erfolgen muß.

Die Erfindung betrifft ein Verfahren zur Polymerisation von VC oder Mischungen von VC nach dem

Emulsions-, Suspensions- oder Mikrosuspensions verfahren mit bis zu 30Gew.%, bezogen auf die Monomerenmischung, an anderen, mit VC copolymerisierbaren Monomeren in einem Polymerisationsansatz in Gegenwart von

a) wäßrigen Lösungen von Verbindungen von Aminomono- oder -polycarbonsäuren und/oder Polyaminopolycarbonsäuren,
b) wasser- oder monomerlöslicher, in Radikale zerfallen- der Katalysatoren, sowie
c) Dispergierhilfsmitteln und

gegebenenfalls in Gegenwart von weiteren

d) Polymerisationshilfsstoffen oder
e) Zusatzstoffen

bei Temperaturen im Bereich von 40 bis 80°C und wobei man gegebenenfalls den Polymerisationsansatz vor Durchführung der Polymerisation durch Einwirkung von Scherkräften homogenisiert, dadurch gekennzeichnet, daß man die Verbindungen a) in Mengen von 0,05 bis 1,0 Gew.%, bezogen auf das Monomere oder das Monomerengemisch, anwendet und daß man in der wäßrigen Lösung vor der Homogenisierung oder der Polymerisation einen pH-Wert von 5 oder $< 5$ einstellt, und wobei die Zugabe der Verbindungen a) bei der Zubereitung des Polymerisationsansatzes zumindest vor der Zugabe des VC oder des Monomerengemisches erfolgt.

Im erfindungsgemäßen Verfahren können Vinylchlorid allein oder Mischungen von Vinylchlorid mit anderen, mit Vinylchlorid copolymerisierbaren Monomeren, eingesetzt werden. Dabei können die Monomerenmischungen bis zu 30 Gew.%, vorzugsweise bis zu 15 Gew.%, bezogen auf die Monomerenmischung, der anderen Comonomeren enthalten, Beispiele für mit Vinylchlorid copolymerisierbare Monomere sind: Vinylidenchlorid, Vinylester, wie Vinylacetat oder Vinylpropionat, Vinyläther, Acrylester, Acrylnitril oder Olefine, wie Ethylen oder Propylen, ungesättigte Dicarbonsäuren, gegebenenfalls teilweise oder ganz verestert, wie Maleinsäure, Fumarsäure, Itaconsäure, Maleinsäuremonomethylester oder Maleinsäuredibutylester u.dgl.

Der Polymerisationsansatz umfaßt Wasser, sowie alle Zusatzstoffe, wie die erfindungsgemäß anzuwendenden Verbindungen von Aminomono- oder -polycarbonsäuren oder Polyaminopolycarbonsäuren, die Dispergierhilfsmittel, die Katalysatoren, sowie gegebenenfalls die weiteren Polymerisationshilfsstoffe, wie regler oder Kettenverzweiger oder die Zusatzstoffe, wie Gleitmittel, Stabilisatoren u.dgl., sowie die zu polymerisierenden Monomeren bzw. das Monomerengemisch. Die Zubereitung des Polymerisationsatzes erfolgt dabei in der Regel in der Weise, daß zunächst das Wasser vorgegeben wird und durch Zugabe der Verbindungen a) ein pH-Wert von 5 oder kleiner als 5 eingestellt wird. Falls anstelle der freien Säuren Salze eingesetzt werden, muß durch Verwendung einer entsprechenden Menge von verdünnten Mineralsäuren, wie Salzsäure, Schwefelsäure, Phosphorsäure u.dgl. der pH entsprechend eingestellt werden. Danach erfolgt die Zugabe der Dispergierhilfsmittel, woran sich die Starterzugabe anschließt. Schließlich wird das Monomere bzw. das Monomeren gemisch zu den vorhandenen Ingredienzien zugegeben. Die Zugabe der weiteren Polymerisationshilfsstoffe d) bzw. der Zusatzsatzstoffe e) erfolgt, falls dies vorgesehen ist, vor der Zugabe des(r) Monomeren.

Die freien (a) Aminomono- oder -polycarbonsäuren bzw. Polyaminopolycarbonsäuren bzw. deren Salze, die für das erfindungsgemäße Verfahren wesentlich sind, werden in Mengen von 0,05 bis 1,0 Gew.%, bezogen auf das Monomere bzw. auf das Monomerengemisch, angewendet. Insbesondere werden Mengen von 0,08 bis 0,5%, und bevorzugt solche von 0,1 bis 0,3% angewendet. Die vorstehend genannten Bereiche gelten sowohl für die Aminomono- oder -polycarbonsäuren oder die Polyaminopolycarbonsäuren als auch für die Gemische aus beiden Verbindungsklassen.

Als Katalysatoren (b) kommen je nach dem anzuwendenden Verfahren wasser- oder monomerlösliche, in Radikale zerfallende Katalysatoren in Betracht. Es können dabei die üblichen, monomerlöslichen Initiatoren, wie organische Peroxide, Perester, Peroxidicarbonate, in üblichen und bekannten Mengen alleine oder in Mischungen von 2 oder mehr der vorstehend genannten Bestandteile verwendet werden. Die angewendeten Mengen liegen daher im Bereich von 0,005 bis 0.5 Gew.%, vorzugsweise werden Mengen von 0,01 bis 0,1 Gew.%, bezogen auf die zu polymerisierenden Monomeren oder das Monomerengemisch, angewendet. Als wasserlösliche Katalysatoren werden beispielsweise die Persulfate, die Hydroperoxide und die Persäuren in bekannten Mengen, angewendet.

Als Dispergierhilfsmittel (c) können die üblicherweise wasserlöslichen Dispergierhilfsmittel verwendet werden. Als wasserlösliche Dispergierhilfsmittel kommen die Alkylsulfonate, Alkylarylsulfonate, Alkylsulfate, Seifen oder Salze der Dialkylsulfobernsteinsäure in Mengen von 0,3 bis 3,0 bezogen auf das Monomere bzw. das Monomerengemisch in Betracht. Diese können dabei jeweils einzeln oder in Mischung von 2 oder mehreren eingesetzt werden.

Ferner kommen je nach dem anzuwendenden Verfahren folgende Suspensionshilfsmittel bzw. Schutzkolloide in üblichen Mengen in Betracht: Polyvinylalkohol, teilweise verseiftes Polyvinylacetat, Celluloseäther, wie Methylcellulose, Hydroxyethylcellulose, Hydroxypropylcellulose oder Hydroxypropylmethylcellulose, sowie die Carboxymethylcellulose, ferner Polyvinylpyrrolidon oder Gelatine, Diese Schutzkolloide können einzeln oder im Gemisch verwendet werden. Sie lassen sich auch mit den vorstehend genannten Dispergierhilfsmitteln kombiniert anwenden.

Als Polymerisationshilfsstoffe (d) kommen gegebenenfalls die üblichen Molekulargewichtsregler, wie aliphatische Aldehyde, Chlorkohlenwasserstoffe, z.B. Di- und Trichlorethylen, Chloroform und die Mercaptane in üblichen Mengen in Frage.

Als Zusatzstoffe (e) können gegebenenfalls die üblichen Gleitmittel und Stabilisatoren in üblichen Mengen angewendet werden.

Die Polymerisation kann in einem Temperaturbereich von 40 bis 80°C durchgeführt werden, insbesondere wird im Bereich zwischen 45 und 80°C polymerisiert. Je nach dem Verfahren (Emulsion, Suspension bzw. Mikrosuspension) und auch unter Berücksichtigung der verschiedenen Hilfsmittel (Molekulargewichtsregler oder Zusatzstoffe, Katalysator etc.) wird die Temperatur in dem vorstehend genannten Bereich oder sogar darüber bzw. etwas darunter nach den dem Fachmann bekannten Kriterien festgelegt bzw. ausgewählt, wobei auch die Anforderungen, die an das Produkt gestellt werden, mit berücksichtigt werden.

Die Durchführung der Polymerisation nach vorheriger Homogenisierung des Polymerisationsansatzes (Mikrosuspensionsverfahren) erfolgt nach dem in der DE—AS 10 50 062 oder dem in der DE—AS 21 25 586 beschriebenen Verfahren. Dabei wird zunächst unter Anwendung von Scherkräften eine feinteilige Monomerenemulsion mit einer Tröpfchengröße im Bereich von etwa 0,1 bis 2 $\mu$ hergestellt und anschließend die eigentliche Polymerisation durchgeführt. Für die Abfuhr der Reaktionswärme bei der Mikrosuspensionspolymerisation können dabei selbstverständlich die vorgeschlagenen Lösungen für die Abfuhr der Reaktionswärme berücksichtigt werden (Siedekühlung, vgl. z.B. DE—AS 21 17 364 oder die Verwendung bestimmter Starterkombinationen von langsam und schnell zerfallenden Startern, vgl. DE—AS 21 39 680).

Das Verhältnis von Monomermenge: Wasser in der Emulsion oder Suspension liegt üblicherweise im Bereich von 0,4:1 bis 2:1, vorzugsweise im Bereich von 0,6:1 bis 1,5:1. Die vorstehend genannten Bereiche gelten auch für die Anwendung von Monomerenmischungen.

Die Polymerisation kann sowohl in Stahlreaktoren ausgeführt, die mit V2A-Stahl bzw. V4A-Stählen ausgekleidet sind, als auch in emaillierten Reaktoren durchgeführt werden.

Bezüglich des anzuwendenden Druckes ist festzuhalten, daß sich dieser daraus ergibt, daß die Reaktion in der Regel in einem geschlossenen Gefäß durchgeführt wird. Der Gesamtdruck ergibt sich durch Addition der Partialdrücke des Wassers und der Monomeren sowie gegebenenfalls anwesender Inerter. In der Regel wird das Verfahren daher bei Drücken von oberhalb 1 bar durchgeführt, wobei der Anfangsdruck in der Regel höher ist als der Enddruck, d.h. als der Druck, bei dem die Polymerisation schon zu einem Umsatz von bis zu 80 bzw. 90% erfolgt ist.

Das erfindungsgemäße Verfahren kann sowohl kontinuierlich als auch diskonitinuierlich durchgeführt werden, wobei jeweils die dem Fachmann bekannten Regeleinrichtungen für die Abfuhr der Reaktionswärme benutzt werden können.

Wesentlich für die Wandbelagsverhinderung bei der Durchführung des erfindungsgemäßen Verfahrens ist der Zusatz von Aminomono- oder -polycarbonsäuren oder Polyaminopolycarbonsäuren oder Mischungen dieser Verbindungsklassen. Diese Verbindungen sollten zumindest vor Zugabe des oder der Monomeren zu dem Polymerisationsansatz anwesend sein und auf den erforderlichen pH-Wert eingestellt werden. Wie bereits ausgeführt, ist es wesentlich, daß diese Verbindungen bei einem pH-Wert von 5 oder $< 5$ insbesondere $< 4,0$, angewendet werden. Der pH-Wert im Sinne der vorliegenden Erfindung wird jeweils bezogen auf die wäßrige Phase.

Als Aminomono- oder -polycarbonsäuren kommen die freien Säuren oder die Salze von Verbindungen der Struktur $R_nN(R'—COOH)_{3-n}$ in Betracht. n steht dabei für Zahlenwerte von 0,1 oder 2. R kann sein: Hydroxyalkyl, z.B. $HOC_2H_4$-Aminoalkyl, z.B. $NH_2—CH_2$ oder $NH_2C_2H_4$. R' kann sein: Alkylen, z.B. Alkylenreste mit 1 bis 6 C-Atomen, die gegebenenfalls substituiert sein können. Bevorzugt wird.

Nitrilotriessigsäure (NTA) als Aminopolycarbonsäure verwendet. Falls die Salze angewendet werden, sind die der Alkalien, insbesondere des Na, und der Erdalkalien, insbesondere des Calciums, bevorzugt.

Als Polyaminopolycarbonsäuren kommen die freien Säuren oder die Salze von Verbindungen der Struktur

$$(HOOCR')_{3-n}(R)_{n-1}—N—(R'')—N(R)_{n-1}(R'COOH)_{3-n}$$

in Betracht, wobei n die Zahlenwerte 1 oder 2 annehmen kann und R, sowie R' die vorstehend genannte Bedeutung haben können. R'' kann bedeuten: Alkylen- oder mit OH— bzw. $NH_2$—Gruppen substituierte Alkylengruppen mit z.B. 1 bis 6 C-Atomen, sowie Cycloalkylen, z.B. Cyclohexylen oder dessen höhere Homologe mit bis zu 8 C-Atomen, die ihrerseits wieder substituiert sein können. Insbesondere werden die Ethylendiamintetraessigsäure (ADTA) und die Diethylen-triamin-pentaessigsäure sowie die Cyclohexylen - (1,2) - dinitrilo - tetraessigsäure als Polyaminopolycarbonsäuren angewendet. Falls die Salze angewendet werden, sind die der Alkalien, insbesondere des Na, und der Erdalkalien, insbesondere des Calciums, bevorzugt.

Ein Vorteil des erfindungsgemäßen Verfahren ist, daß die Wandbelagsbildung weitestgehend vermieden wird. Es wird dadurch möglich, in einem bestimmten Polymerisationsansatz die Reaktion praktisch beliebig oft hintereinander in dem gleichen Reaktor durchzuführen, ohne daß dieser gereinigt werden muß. Die Beurteilung der Wandbelagsbildung in den nachfolgenden Beispielen und Vergleichsversuchen erfolgt nach dem folgenden Prinzip:

Der Wandbelag, der sich bei Verwendung des Tetranatriumsalzes der Ethylendiamintetraessigsäure (EDTA-Tetra-Na-Salz, vgl. Versuch 7 in der Tabelle) gemäß der Lehre der DE—OS 17 95 046 ergab, wird mit der Zahl 100 bewertet. In den folgenden Beispielen, die das erfindungsgemäße Verfahren näher erläutern, und in weiteren Vergleichsversuchen wurde stets auf diesen Wert 100 bezogen, d.h. niedrigere Zahlenwerte bedeuten geringeren Wandbelag. Es wurde stellvertretend das diskontinuierliche Suspensionspolymerisationsverfahren gewählt, um die erfindungsgemäße Lehre zu verdeutlichen. Die in den Beispielen genannten Teile und Prozente beziehen sich, falls nichts anderes vermerkt ist, auf das Gewicht.

## Beispiel 1

In einem Polymerisationsautoklaven mit einem Fassungsvermögen von 2 $m^3$, der mit einer polierten Innenausstattung aus V2A-Stahl und einem Impeller-Rührer versehen ist, wurden 945 kg vollentsalztes Wasser eingefüllt; dazu wurden 1,1 kg, entsprechend 0,2%, bezogen auf VC, Diethylentriaminpentaessigsäure gegeben. Zu dieser Lösung, die einen pH-Wert von 2,4 aufweis, gab man 389 g, entsprechend 0,075 %, bezogen auf VC, eines teilverseiften Polyvinylacetats mit einem Verseifungsgrad von 75 Mol% und einer Viskosität der 4%igen wäßrigen Lösung von 5 mPa.s (bei 20°C), sowie 139 g einer Methylcellulose mit einem Methoxylgehalt von 28% und einer Viskosität der 2%igen wäßrigen Lösung von 50 mPa.S (bei 20°C) entsprechend 0,025% bezogen auf VC und 333 g t-Butylperneodecanoat. Der Autoklav wurde verschlossen und durch Aufpressen von 10 bar Stickstoff auf seine Dichtheit überprüft. Nach dem Entspannen gab man 555 kg Vinylchlorid in den Autoklaven und erwärmte auf 53°C. Dabei stieg der Druck auf 9 bar an. Nach ca. 5 Stunden war der Druck von ursprünglich 9 bar um 2 bar unter den konstanten Höchstdruck gefallen; nach dieser Zeit wurde die Polymerisation durch Abkühlen abgebrochen und der Autoklav nach Entfernung des restlichen nichtumgesetzten Vinylchlorids entleert.

Die Belagsbildung an den Kesselinnenflächen und an den Einbauten des Kessels wurde nach folgenden Kriterien beurteilt. Der Belag wird nach Dicke und Entfernbarkeit mit den Noten 1 bis 10 beurteilt, wobei 1 keine Belagsbildung wiedergibt und die Note 10 einen Belag üblicher Dicke darstellt, der mit einem PVC-Schaber nicht entfernbar ist. Die Dicken werden dabei mit folgenden Faktoren unterschiedlich gewichtet:

| | |
|---|---|
| Obere Reaktorwandhälfte | = Faktor 4 |
| Untere Reaktorwandhälfte | = Faktor 3 |
| Boden | = Faktor 3 |

Die Summe dieser drei Wichtungen ergibt maximal die Zahl 10. Wird diese Zahl 10 mit den Faktoren 1 bis 10 entsprechend der Dicke und Entfernbarkeit des Belages multipliziert, so ergeben sich Punktzahlen von 10 bis 100, wobei als beste Punktzahl die Zahl 10 erreichbar ist. Im vorliegenden Beispiel ergab sich bei einmaliger Benutzung des Reaktors eine Beurteilung von 10 Punkten, d.h. es hatte sich kein Belag gebildet. Nach vier weiteren Versuchen, die unter denselben Bedingungen durchgeführt wurden, ergab sich für die Belagsbildung eine Bewertung von 21 Punkten.

## Beispiele 2 bis 6

In der vorstehend beschriebenen Versuchsapparatur und mit Ausnahme der nachfolgend beschriebenen Abänderungen wurde der in Beispiel 1 beschriebene Versuch wiederholt. Die gewählte Reaktionstemperatur, der pH-Wert des Polymerisationsansatzes vor Zugabe des Monomeren, sowie die Menge und die Art des Zusatzes an Wandbelagverhinderer sind in der nachfolgenden Tabelle genannt. In der Tabelle sind auch die Werte für Beispiel 1 mit aufgeführt. Für alle Versuche ist in der Tabelle die Bewertung des Wandbelages in Abhängigkeit von der Zahl der Versuche (1 bzw. 5 Versuche) aufgeführt.

Außerdem sind in der Tabelle die Ergebnisse von Vergleichsversuchen aufgenommen worden. Versuch 7 beschreibt den Stand der Technik, wie er sich aus der DE—OS 17 95 046 ergibt. Versuch 8 repräsentiert den Stand der Technik gemäß US—PS 3 125 557, Beispiel 2, Teil B, jedoch mit der Besonderheit, daß der in der zitierten Anmeldung genannte Höchstbetrag von 300 ppm an organischen Komplexbildner verwendet wurde. Versuch 9 schließlich repräsentiert den Stand der Technik, wie bei Versuch 7 geschildert. Versuch 10 wurde in Abwesenheit von Amino- mono- bzw. -polycarbonsäuren bzw. Polyaminopolycarbonsäuren durchgeführt.

Der Vergleich der in der Tabelle dargestellten Ergebnisse zeigt, daß sowohl die Menge (vgl. Versuch 8) als auch die Bedingung "Einhaltung des pH-Wertes" auf Werte von 5 oder $< 5$ gleichzeitig erfüllt sein müssen, wenn eine Effektivität der Zusätze bezüglich ihrer Wirkung als Wandbelagsverhinderer gegeben sein soll.

TABELLE

| Versuch Nr. | Art des Zusatzes | Menge | pH-Wert | T °C | Wandbelag nach Versuchen 1 | 5 |
|---|---|---|---|---|---|---|
| 1 | Dithylentriaminpentaessigsäure | 0,20 | 2,4 | 53 | 10 | 21 |
| 2 | EDTA | 0,15 | 2,6 | | 20 | |
| 3 | NTA | 0,20 | 2,2 | | – | 22 |
| 4 | NTA | 0,10 | 2,8 | | – | 30 |
| 5 | Cyclohexylen-(1,2)-dinitrilotetraessigsaure | 0,20 | 2,8 | | 20 | – |
| 6 | TriNa-Salz von 3 mit $H_2SO_4$ angesäuert | 0,20 | 3,0 | | – | 22 |
| 7 | EDTA-TetraNa-Salz | 0,20 | 10,8 | | 100 | – |
| 8 | $Na_2H_2$-EDTA | 0,03 | 5,0 | | 70 | – |
| 9 | NTA-TriNa-Salz | 0,20 | 10,6 | | 90 | – |
| 10 | – | – | 7,0 | | 128 | – |

**Patentanspruch**

Verfahren zur Polymerisation von Vinylchlorid oder Mischungen von Vinylchlorid nach dem Emulsions-, Suspensions- oder Mikrosuspensionsverfahren mit bis zu 30 Gew.%, bezogen auf die Monomerenmischung an anderen, mit Vinylchlorid copolymerisierbaren Monomeren in einem Polymerisationsansatz in Gegenwart von

a) wäßrigen Lösungen von Verbindungen von Aminomono- oder -polycarbonsäuren und/oder Polyaminopolycarbonsäuren,
b) wasser- oder monomerlöslichen, in Radikale zerfallen- dem Katalysatoren, sowie
c) Dispergierhilfsmitteln und

gegebenenfalls in Gegenwart von weiteren

d) Polymerisationshilfsstoffen oder
e) Zusatzstoffen

bei Temperaturen im Bereich von 40 bis 80°C und wobei man gegebenenfalls den Polymerisationsansatz vor Durchführung der Polymerisation durch Einwirkung von Scherkräften homogenisiert, dadurch gekennzeichnet, daß man die Verbindungen a) in Mengen von 0,05 bis 1,0 Gew.%, bezogen auf das Monomere oder das Monomerengemisch, anwendet und daß man in der wäßrigen Lösung vor der Homogenisierung oder der Polymerisation einen pH-Wert von 5 oder < 5 einstellt, und wobei die Zugabe der Verbindungen a) bei der Zubereitung des Polymerisationsansatzes zumindest vor der Zugabe des Vinylchlorids oder des Monomerengemisches erfolgt.

**Claim**

A process for the emulsion, suspension or microsuspension polymerization of vinyl chloride or mixtures of vinyl chloride with up to 30% by weight, based on the monomer mixture, of other monomers which are copolymerizable with vinyl chloride, in one batch in the presence of

(a) aqueous solutions of compounds of aminomonocarboxylic or aminopolycarboxylic acids and/or polyaminopolycarboxylic acids,
(b) water-soluble or monomer-soluble free-radical-forming catalysts, and
(c) dispersing agents, and

in the presence or absence of further

(d) polymerisation aids or
(e) additives

at temperatures of from 40 to 80°C, the batch being optionally homogenized, before the polymerization is carried out, by the action of shearing forces, characterized in that compounds (a) are used in amounts of from 0.05 to 1.0% by weight, based on the monomer or monomer mixture, and that the pH of the aqueous solution is adjusted to 5 or < 5 prior to homogenization or polymerization, the addition of compounds (a) during the preparation of the batch being effected at least before the vinyl chloride or monomer mixture is added.

**Revendication**

Procédé pour la polymérisation en émulsion, en suspension ou en microsuspension de chlorure de vinyle ou de mélanges de chlorure de vinyle avec 30% en poids au maximum, par rapport au mélange de monomères, d'autres monomères copolymérisables avec le chlorure de vinyle, en une charge de polymérisation en présence de

a) solutions aqueuses de composés d'acides aminomono- ou polycarboxyliques et/ou d'acides polyaminopolycarboxyliques,
b) catalyseurs de décomposition radicalaire, solubles dans l'eau ou dans les monomères,
c) agents auxiliaires de dispersion

et, le cas échéant, en présence d'autres

d) agents auxiliaires de polymérisation ou
e) additifs,

à des températures se situant dans la gamme de 40 à 80°C et en homogénéisant éventuellement la charge de polymérisation, avant d'effectuer la polymérisation, en faisant agir des forces de cisaillement, caractérisé en ce qu'on utilise les composés a) dans des proportions de 0,05 à 1,0% en poids par rapport au monomère ou au mélange de monomères et en ce qu'on règle un pH de 5 ou de moins de 5 dans la solution aqueuse avant l'homogénéisation ou la polymérisation, l'addition des composés a), lors de la préparation de la charge de polymérisation, étant effectuée au moins avant l'addition du chlorure de vinyle ou du mélange de monomères.